# EUROPÄISCHE PATENTSCHRIFT

(11) **EP 0 805 581 B1**
(45) Veröffentlichungstag und Bekanntmachung des Hinweises auf die Patenterteilung: **10.03.2004**
(21) Anmeldenummer: 97106594.1
(22) Anmeldetag: 21.04.1997
(51) Int. Cl.: H04M 3/42, H04M 3/54, H04M 3/48, H04Q 3/62, H04Q 3/545

(54) **Verfahren und Applikationseinrichtung zum Einrichten von Leistungsmerkmalen im privaten Kommunikationssystem von einem öffentlichen Kommunikationsnetz**
Method and application device for introducing services in a private communication system from a public communication network
Méthode et dispositif d'application pour introduire des services dans un système de communication privé à partir d'un réseau de communication public

(30) Priorität: 30.04.1996 DE 19617392
(43) Veröffentlichungstag der Anmeldung: 05.11.1997
(73) Patentinhaber: SIEMENS AKTIENGESELLSCHAFT, 80333 München (DE)
(72) Erfinder: Spahl, Siegfried, 82178 Puchheim (DE); Ratzberger, Dietmar, 4431 Haidersdorf (AT); Kopitar, Friedrich, 3492 Etsdorf (AT); Lukas, Günter, A-2000 Oberzögersdorf (AT)

(56) Entgegenhaltungen:
- EP-A- 0 529 948
- PATENT ABSTRACTS OF JAPAN vol. 016, no. 073 (E-1169), 21. Februar 1992 (1992-02-21) & JP 03 262370 A (FUJITSU LTD), 22. November 1991 (1991-11-22)

## Beschreibung

Für eine Steuerung von Leistungsmerkmalen in einem Kommunikationsnetz, insbesondere privaten Kommunikationsnetzen, ist eine Kopplung der Kommunikationssysteme, insbesondere private Nebenstellenanlagen, mit einer Applikationseinrichtung über eine Applikationsschnittstelle bzw. ACL-Schnittstelle vorgesehen. Gemäß dieser Applikationsschnittstelle ist physikalisch das private Kommunikationssystem, beispielsweise das private Kommunikationssystem HICOM 300 der Firma Siemens, über eine V.24-Schnittstelle oder alternativ über eine ISDN-Basisschnittstelle (S0) mit der Applikationseinrichtung verbunden. Die Applikationsschnittstelle ist vorzugsweise in einer Betriebstechnik-Einheit - beim Kommunikationssystem HICOM 300 ein integrierter Betriebstechnik-Server - eines Kommunikationssystems realisiert und steuert den Kommunikationsaustausch gemäß einem definierten Protokoll - z.B. MSV1 - mit definierten Meldungen. Die in die Meldung eingebetteten Informationen entsprechenden den vermittlungstechnischen Anweisungen und Ereignismeldungen des Kommunikationssystems. Als Bindeglied zwischen der Applikationseinrichtung und dem Kommunikationssystem ist in diesem eine zur Ausführung der vermittlungstechnischen Anweisungen und zum Generieren der vermittlungstechnischen Ereignismeldungen geeignete, d.h. eine DVA-gesteuerte Verbindungsaufbauten unterstützende Programmstruktur vorgesehen, wobei durch die vermittlungstechnischen Anweisungen die Verbindungssteuerung beeinflußt und durch vermittlungstechnische Ereignismeldungen der aktuelle vermittlungstechnische Zustand von Verbindungen, d.h. auch ankommenden Anrufen, angezeigt wird.

Des weiteren sind von an ein privates Kommunikationssystem angeschlossenen Kommunikationsendgeräten mit Hilfe der Bedieneroberflächen der jeweiligen Kommunikationsendgeräte Leistungsmerkmale, wie z.B. Anrufumleitung und Rückruf, aktivierbar. Üblicherweise aktiviert beispielsweise ein Teilnehmer eine Anrufumleitung an seinem zugeordneten Kommunikationsendgerät, um an seinem Kommunikationsendgerät ankommende Anrufe an ein anderes Kommunikationsendgerät, beispielsweise an ein anderes Kommunikationsendgerät in seiner Firma, umzuleiten. Das Leistungsmerkmal Rückruf aktiviert ein Teilnehmer, um nach einem erfolglosen Ruf bei einem an das private Kommunikationssystem angeschlossenen Kommunikationsendgerät - d.h. einem internen Teilnehmer - von diesem automatisch einen Rückruf zu erhalten. In bestimmten Situationen, beispielsweise bei Dienstreisen oder an einem Heimarbeitsplatz wäre es vorteilhaft, von beliebigen Kommunikationsendgeräten eines öffentlichen Kommunikationssystems in einem an dieses angeschlossenen privaten Kommunikationssystem Leistungsmerkmale - beispielsweise Anrufumleitung oder Rückruf - einzurichten bzw. zu aktivieren oder zu deaktivieren. Beispielsweise soll von einem Teilnehmer, der sich auf Dienstreise befindet, an seinem zugeordneten Kommunikationsendgerät im privaten Kommunikationssystem ein Rückruf zu demjenigen im öffentlichen Kommunikationsnetz angeordneten Kommunikationsendgerät einrichtbar bzw. aktivierbar sein, an dem sich der Teilnehmer aktuell befindet.

Es sind Verfahren bekannt, wobei zum Einrichten von Leistungsmerkmalen ein reales Kommunikationsendgerät des Kommunikationssystems angerufen wird, wie in EP-A-0 549 948 offenbart. Die Verwendung von realen Kommunikationsendgeräten erlaubt nicht, dass diese sich als Endgerät nahtlos in das Vermittlungskonzept eines Kommunikationssystems einfügen lassen und im Rahmen von dessen üblicher Basisfunktionalität verwaltet werden können. Entsprechend kann ein Anruf an ein solches reales Kommunkationsendgerät nicht auf einfache Weise mittels der üblichen Vermittlungsroutinen des Kommunikationssystems erfasst werden.

Die der Erfindung zugrundeliegende Aufgabe besteht darin, ein Einrichten bzw. Aktivieren von Leistungsmerkmalen von an ein privates Kommunikationssystem angeschlossenen Kommunikationsendgeräten von einem öffentlichen Kommunikationsnetz, d.h. extern, aus zu ermöglichen. Die Aufgabe wird durch die Merkmale des Anspruchs 1 gelöst.

Der wesentliche Aspekt des erfindungsgemäßen Verfahrens ist darin zu sehen, daß alle von einem Kommunikationsnetz, insbesondere öffentlichen Kommunikationssystem, an ein Kommunikationssystem - insbesondere privaten Kommunikationssystem gerichteten, erfolglosen Anrufe und an zumindest ein Leistungs-merkmal-Kommunikationsendgerät des privaten Kommunikationssystems gerichteten Anrufe erfaßt werden. Das erfindungsgemäße Verfahren ist für ankommende Anrufe konzipiert, die im Kommunikationssystem mit Hilfe von in den ankommenden Anrufen eingefügten Durchwahlinformationen direkt an die betreffenden Kommunikationsendgeräte des privaten Kommunikationssystems vermittelt werden. Hierzu ist in der Signalisierungsinformation der ankommenden Anrufe sowohl die Rufnummer des rufenden als auch die des gerufenen Kommunikationsendgerätes eingefügt. Die eingefügten Rufnummern des rufenden und des gerufenen Kommunikationsendgerätes werden miterfaßt und über die Applikationsschnittstelle an die eingangs beschriebene Applikationseinrichtung übermittelt. In der Applikationseinrichtung wird für ein Kommunikationsendgerät des privaten Kommunikationssystems ein zu aktivierendes bzw. einzurichtendes Merkmal in Abhängigkeit von den erfaßten Rufnummern einschließlich zumindest eines Teils der erfaßten Rufnummern eingetragen, wobei das einzutragende Leistungsmerkmal durch die Rufnummer des virtuellen Leistungsmerkmal-Kommunikationsendgerätes bestimmt ist. Sind beispielsweise zwei Leistungsmerkmal-Kommunikationsendgeräte vorgesehen - eines für das Leistungsmerkmal Anrufumleitung und ein weiteres für das Leistungsmerkmal Rückruf - so ist durch die Rufnummer des jeweiligen Leistungsmerkmal-Kommunikationsendgerätes das einzutragende Leistungsmerkmal, beispielsweise Anrufumleitung oder Rückruf bestimmt.

Ein wesentlicher Vorteil des erfindungsgemäßen Verfahrens ist darin zu sehen, daß ein "externes Einrichten bzw. Aktivieren", d.h. ein Aktivieren bzw. ein Einrichten von einem Kommunikationsendgerät eines öffentlichen Kommunikationsnetzes möglich ist, wobei lediglich in der Applikationseinrichtung eine entsprechende programmtechnisch realisierte Applikation zu implementieren ist und das eingangs beschriebene Kommunikationssystem unverändert bleibt. Des weiteren kann die in der Applikationseinrichtung realisierte Applikation durch Eingaben an seiner Bedieneroberfläche - bei einem Personalcomputer eine Tastatur - in einfacher Weise modifiziert werden, wodurch eine größtmögliche Flexibilität zum Einrichten bzw. Aktivieren von unterschiedlichsten Leistungsmerkmalen für unterschiedlichste Kommunikationsendgerätegruppen erreicht wird.

Bei einem einzurichtenden Leistungsmerkmal Rückruf wird dem Leistungsmerkmal-Kommunikationsendgerät eine dieses Leistungsmerkmal Rückruf anzeigende Rufnummer zugeordnet. In der Applikationseinrichtung wird ein Rückruf eingetragen, sofern innerhalb einer vorgegebenen Zeitspanne zumindest ein ankommender, erfolgloser Anruf für das jeweilige Kommunikationsendgerät und ein an ein Leistungs-Merkmalendgerät gerichteter, ankommender Anruf erfaßt werden, bei denen die Rufnummern der rufenden Kommunikationsendgeräte übereinstimmen. Dies bedeutet, daß nur dann ein Rückruf für ein Kommunikationsendgerät eingerichtet bzw. eingetragen wird, sofern innerhalb eines vorgegebenen Zeitraums, beispielsweise zwei Minuten, ein von einem Kommunikationsendgerät des öffentlichen Kommunikationsnetzes ankommender Anruf zu dem jeweiligen Kommunikationsendgerät erfolglos war und ein zusätzlicher ankommender Anruf vom gleichen Kommunikationsendgerät des öffentlichen Kommunikationsnetzes an ein spezielles Leistungsmerkmal-Kommunikationsendgerät erfaßt wurde. In der Applikationseinrichtung wird nach dem erfindungsgemäßen Eintragen eines Rückrufs für ein jeweiliges, an das private Kommunikationssystem angeschlossene Kommunikationsendgerät nach einer vom Kommunikationssystem gemeldeten Aktivität des jeweiligen Kommunikationsendgerätes für dieses ein Rückruf eingeleitet - Anspruch 3. Der wesentliche Vorteil dieser Maßnahme besteht darin, daß dieses Einrichten bzw. Aktivieren eines Rückrufs nicht im Kommunikationssystem, sondern in der Applikationseinrichtung eingeleitet und gesteuert wird, wobei durch ein eingangs erläutertes Kommunikationssystem lediglich die Aktivität des jeweiligen Kommunikationsendgerätes gemeldet wird. Der Rückruf wird vorteilhaft durch betriebstechnische Anweisungen eingeleitet und gesteuert, die über die Applikationsschnittstelle an das Kommunikationssystem übermittelt werden. Im Kommunikationssystem wird gemäß der betriebstechnischen Anweisungen ein Verbindungsaufbau vom jeweiligen Kommunikationsendgerät zu dem jeweiligen rufenden Kommunikationsendgerät im öffentlichen Kommunikationsnetz eingeleitet - Anspruch 4.

Bei einem einzurichtenden Leistungsmerkmal Anrufumleitung wird dem Leistungsmerkmal-Kommunikationsendgerät eine das Leistungsmerkmal Anrufumleitung anzeigende Rufnummer zugeordnet und in der Applikationseinrichtung (PC) wird eine Anrufumleitung für das jeweilige Kommunikationsendgerät eintragen, sofern ein an das jeweilige virtuelle Leistungsmerkmal-Kommu-nikationsendgerät gerichteter, ankommender Anruf erfaßt wird. Gemäß einer ersten Variante ist für das jeweilige Kommunikationsendgerät des privaten Kommunikationssystems in der Applikationseinrichtung vorab eine Anrufumleitungs-Rufnummer eingetragen bzw. vorgegeben - beispielsweise wird als Anrufumleitungs-Rufnummer die Rufnummer des Heimarbeitsplatzes über die Bedieneroberfläche der Applikationseinrichtung eingetragen bzw. vorgegeben. Mit Hilfe der Applikationseinrichtung wird nach einem erfindungsgemäßen Eintragen einer Anrufumleitung für eines der Kommunikationsendgeräte ein an dieses gerichteter ankommender Ruf zu einem durch die Anrufumleitungs-Rufnummer bestimmten Kommunikationsendgerät umgeleitet - Anspruch 5. Alternativ kann die Anrufumleitungs-Rufnummer in einen ankommenden Ruf eingefügt sein, der an das Leistungsmerkmal-Kommunikationsendgerät gerichtet ist. Diese Anrufumleitungs-Rufnummer wird im Kommunikationssystem zusätzlich erfaßt und an die Applikationseinrichtung übermittelt sowie in dieser gespeichert - Anspruch 6.

Gemäß einer vorteilhaften Weiterbildung des erfindungsgemäßen Verfahrens wird nach einem Melden eines ankommenden Anrufes, der an ein Kommunikationsendgerät des privaten Kommunikationssystems gerichtet und für den eine Anrufumleitung eingerichtet ist, die Anrufumleitung durch Übermitteln von betriebstechnischen Anweisungen über die Applikationsschnittstelle an das Kommunikationssystem eingeleitet. In diesem wird gemäß den betriebstechnischen Anweisungen der ankommende Anruf an ein durch die Anrufumleitungs-Rufnummer vorgegebenes Kommunikationsendgerät - im öffentlichen Kommunikationsnetz oder privaten Kommunikationssystem - umgeleitet - Anspruch 7. Durch dieses Melden des ankommenden Anrufs und das Einleiten der Anrufumleitung durch die Applikationseinrichtung ist eine vollständige Realisierung des erfindungsgemäßen Verfahrens in der Applikationseinrichtung möglich, d.h. das eingangs beschriebene private Kommunikationssystem bleibt unverändert.

Weitere vorteilhafte Ausgestaltungen des erfindungsgemäßen Verfahrens sowie eine Applikationseinrichtung zur Durchführung des erfindungsgemäßen Verfahrens ist den weiteren Ansprüchen zu entnehmen.

Im folgenden wird das erfindungsgemäße Verfahren bzw. die erfindungsgemäße Applikationseinrichtung anhand eines Blockschaltbildes und von drei Ablaufdiagrammen näher erläutert. Dabei zeigen
- FIG 1: in einem Blockschaltbild ein Kommunikationssystem einschließlich der erfindungsgemäßen Applikationseinrichtung,
- FIG 2A: in einem Ablaufdiagramm die erfindungsgemäße Erfassungsroutine,
- FIG 2B: in einem Ablaufdiagramm die erfindungsgemäße Anrufumleitungsroutine und
- FIG 2C: in einem Ablaufdiagramm die erfindungsgemäße Rückrufroutine

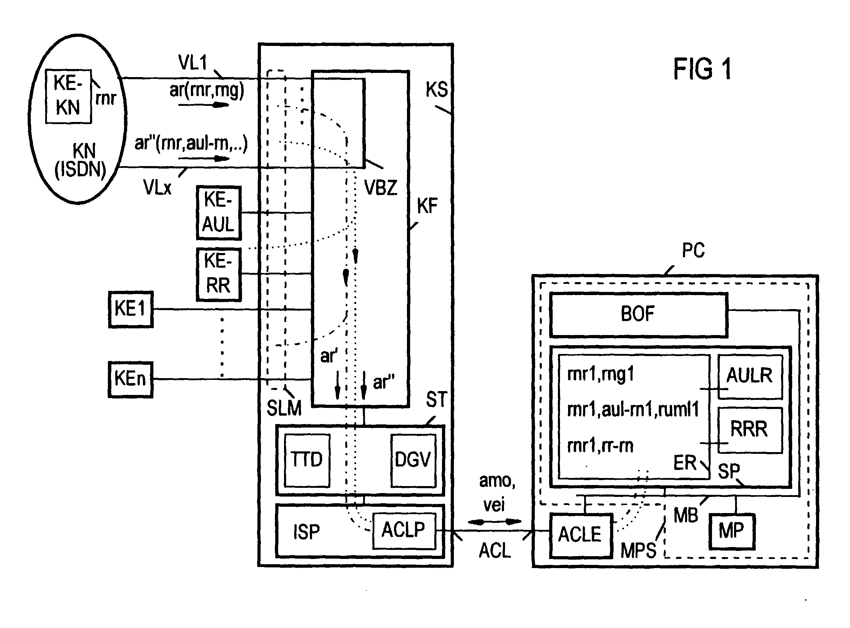

FIG 1 zeigt ein Kommunikationssystem KS - insbesondere ein privates Kommunikationssystem - mit einer Applikationsschnittstelle - im weiteren mit ACL-Schnittstelle ACL bezeichnet -, an die über eine gleichartig realisierte ACL-Schnittstelle ACL eine durch einen Personalcomputer realisierte Applikationseinrichtung PC - im weiteren mit Personalcomputer PC bezeichnet - angeschlossen ist. Im Kommunikationssystem KS ist die ACL-Schnittstelle ACL durch eine in einen integrierten Betriebstechnik-Server IPS implementierte ACL-Programmstruktur ACLP realisiert; im Personalcomputer PC ist die ACL-Schnittstelle ACL in einer ACL-Einheit ACLE physikalisch und prozedural realisiert. Die Abkürzung ACL steht für Applications Connectivity Link und bedeutet, daß über die ACL-Schnittstelle ACL ein Kommunikationsaustausch für eine applikationsabhängige Verbindungssteuerung im Kommunikationssystem KS über eine Verbindung, d.h. einen Link gesteuert wird.

Das Kommunikationssystem KS weist für die vermittlungstechnische sowie betriebstechnische Steuerung eine Steuereinrichtung ST auf, die mit einem Koppelfeld KF und dem integrierten Betriebstechnik-Server ISP verbunden ist. In der Steuereinrichtung ST ist neben der nicht dargestellten, wesentlichen vermittlungs- und betriebstechnischen Programmstruktur eine DVA-gesteuerte Verbindungsaufbauten unterstützende Programmstruktur DGV - d.h. eine Vermittlungsroutine DGV - für eine Zusammenarbeit mit dem Personalcomputer PC und zusätzlich eine Text-Daten-Programmstruktur TDD vorgesehen, mit deren Hilfe von an das Kommunikationssystem KS angeschlossenen Kommunikationsendgeräten Daten über das Kommunikationssystem KS an den Personalcomputer PC und umgekehrt übermittelt werden.

An das Koppelfeld KF sind Kommunikationsendgeräte KE1..n angeschlossen, für die interne und an ein öffentliches Kommunikationsnetz KN gerichtete Kommunikationsverbindungen vermittelt werden. Im Koppelfeld KF ist hierzu mit Hilfe der Steuereinrichtung ST eine Verkehrsbeziehungsgruppe VBZ konfiguriert, d.h. eingerichtet, der an das Kommunikationssystem KS angeschlossene Verbindungsleitungen VL1...x zugeordnet sind. Die Verbindungsleitungen VL1..x sind mit dem öffentlichen Kommunikationsnetz KN, insbesondere dem öffentlichen ISDN-Kommunikationsnetz ISDN verbunden. Im diesem Kommunikationsnetz KN sei vorausgesetzt, daß bei Verbindungsaufbauten, d.h. bei ankommenden Rufen, sowohl die Rufnummer des Ursprungsals auch des Ziel-Kommunikationsendgerätes KE-KN, d.h. die Rufnummer des rufenden und des gerufenen Kommunikationsendgerätes KE-KN sowohl innerhalb der Kommunikationssysteme als auch zwischen den Kommunikationssystemen übermittelt werden. Dies bedeutet, daß in einen vom öffentlichen ISDN-Kommunikationsnetz ISDN beim privaten Kommunikationssystem KS ankommenden Anruf ar eine Rufnummer rnr des rufenden als auch eine Rufnummer rng des gerufenen Kommunikationsendgerätes KE-KN, KE1...n eingefügt ist. Die beiden Rufnummern rnr, rng werden als Signalisierungsinformation im Rahmen der ISDN-Signalisierung übermittelt. In der Rufnummer rng des gerufenen Kommunikationsendgerätes KE1...n ist eine Durchwahlinformation - nicht dargestellt - enthalten, durch die ein an das private Kommunikationssystem KS angeschlossenes Kommunikationsendgerät KE1...n adressiert ist. Mit Hilfe dieser Durchwahlinformation wird der ankommende Ruf ar direkt an das jeweilige Kommunikationsendgerät KE1...n vermittelt.

Sowohl die Verbindungsleitungen VL1...x als auch die Kommunikationsendgeräte KE1...n sind über Teilnehmeranschlußschaltungen SLM - durch ein strichliertes Rechteck angedeutet - an das Koppelfeld KF angeschlossen. Die DVA-gesteuerte Verbindungsaufbauten unterstützende Programmstruktur bzw. die Vermittungsroutine DGV ist durch betriebstechnische Einstellungen derart einstellbar, daß lediglich über die Verbindungsleitungen VL1..x ankommende, erfolglose Anrufe ar' erfaßt werden. Erfolglose ankommenden Anrufe ar' sind Anrufe ar', bei denen das adressierte Kommunikationsendgerät KE1...n bereits in eine andere Kommunikationsbeziehung einbezogen, d.h. belegt ist, oder bei denen das adressierte Kommunikationsendgerät KE1...1, d.h. das jeweilige Kommunikationsendgerät KE1...1 nicht aktiviert wird - z.B. der Teilnehmer hebt nicht ab. Bei einem Erfassen eines ankommenden, erfolglosen Anrufes ar' wird sowohl die Rufnummer rnr, rng des gerufenen als auch des rufenden Kommunikationsendgerätes KE-KN, KE1...n durch die Vermittlungsroutine DGV erfaßt und über die ACL-Schnittstelle ACL an die Applikationseinrichtung PC übermittelt.

Erfindungsgemäß werden zusätzlich ankommende Anrufe ar'' erfaßt, die an spezielle Leistungsmerkmal-Kommunikationsendgeräte KE-AUL, KE-RR adressiert bzw. gerichtet sind. Hierbei ist beispielsweise ein Leistungsmerkmal-Kommunikationsendgerät KE-AUL für ein Leistungsmerkmal Anrufumleitung AUL und das weitere Leistungsmerkmal-Kommunikationsendgerät KE-RR für das Leistungsmerkmal Rückruf RR vorgesehen. Dies bedeutet, daß die in einem ankommenden Anruf ar erfaßte Rufnummer aul-rn,rr-rn des gerufenen Kommunikationsendgerätes KE-AUL, KE-RR ein Leistungsmerkmal Rückruf RR oder Anrufumleitung AUL repräsentiert. Beim Erfassen derartiger ankommender Anrufe ar'' werden ebenfalls die Rufnummer rnr,aul-rn,rr-rn des rufenden als auch des gerufenen Kommunikationsendgerätes KE-KN, KE1..n mit Hilfe der Vermittlungsroutine DGV erfaßt und an die Applikationseinrichtung PC weitergeleitet.

Die Applikationseinrichtung PC weist ein Mikroprozessorsystem MPS auf, in dem an einen Mikroprozessorbus MB, ein Mikroprozessor MP, ein Speicher SP, eine ACL-Einheit ACLE und eine Bedieneroberfläche BOF angeschlossen sind. Die Bedieneroberfäche BOF ist PC-üblich durch eine Bildschirmeinrichtung und eine Tastatur gebildet. In dem einen Daten- und Programmbereich aufweisenden Speicher SP ist eine Erfassungsroutine ER, eine Anrufumleitungsroutine AULR und eine Rückrufroutine RRR gespeichert. Basierend auf einem vorhergehend erläuterten Kommunikationssystem KS ist mit Hilfe dieser drei Routinen ER, RRR, AUL im wesentlichen das erfindungsgemäße Verfahren realisiert.

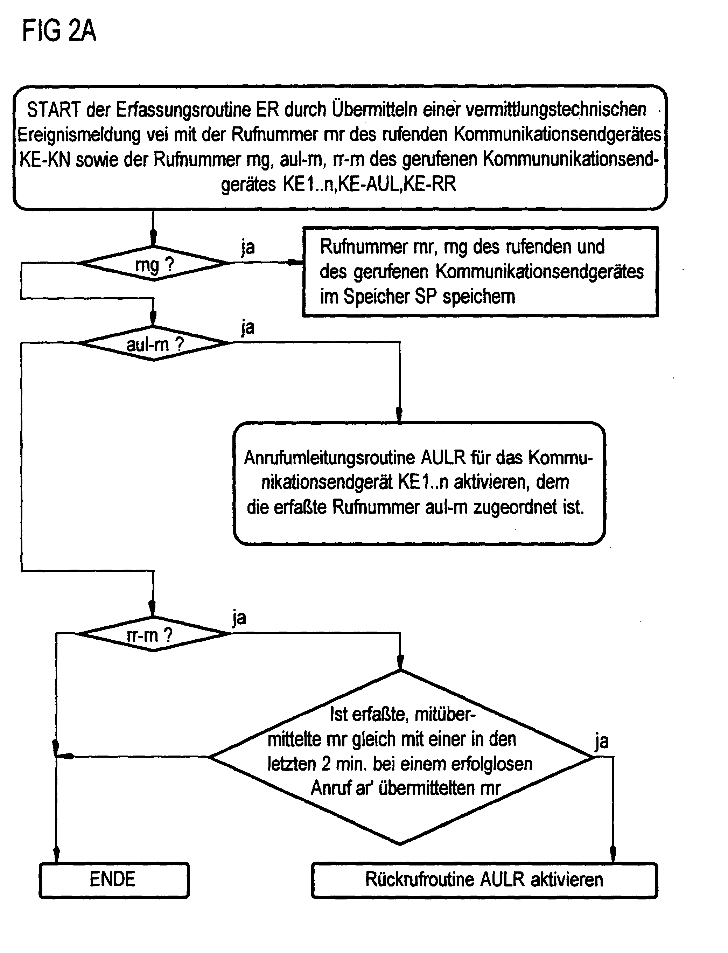

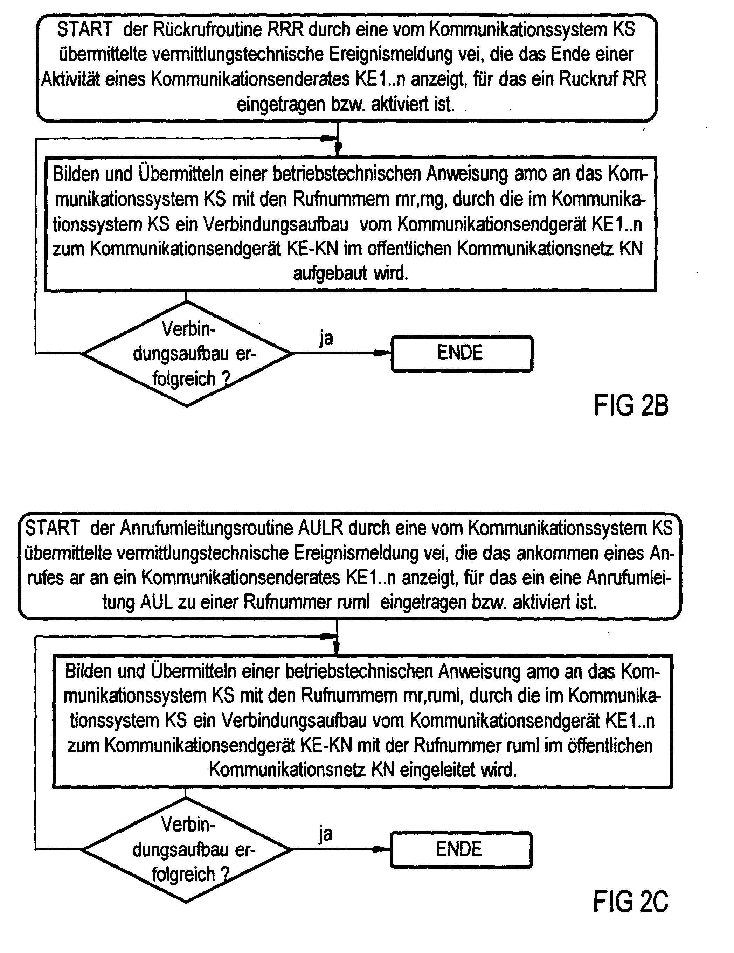

Die Wirkungsweise dieser drei Routinen ER, RRR, AULR ist in den im wesentlichen sich selbst erläuternden Ablaufdiagrammen in FIG 2A bis 2C näher erläutert. Mit Hilfe von von der Applikationseinrichtung PC an das Kommunikationssystem KS übermittelten betriebstechnischen Anweisungen amo und mit Hilfe der Steuereinrichtung ST werden gemäß den in den betriebstechnischen Anweisungen amo enthaltenen vermittlungstechnischen Informationen die jeweilige vermittlungstechnische Aktionen - im Ausführungsbeispiel das Umleiten eines ankommenden Anrufs ar oder das Einleiten eines Rückrufs - eingeleitet bzw. durchgeführt. Die positive oder negative Ausführung der jeweiligen durch eine betriebstechnische Anweisung amo eingeleiteten vermittlungstechnischen Aktion wird durch eine eine betreffende Information enthaltende betriebstechnische Ereignismeldung vei an die Applikationseirichtung PC gemeldet. In dieser kann die jeweils gewünschte vermittlungstechnische Aktion je nach der aktuell ablaufenden Applikation wiederholt oder beendet werden.

Das erfindungsgemäße Verfahren ist für das Einrichten weiterer Leistungsmerkmale wie beispielsweise eine automatische Anrufumleitung ankommender Anrufe zu einer Sprachspeichereinrichtung (Voice Mail Server oder Phone Mail) oder Anrufbeantworter-Einrichtung einsetzbar. Hierbei ist in der Applikationseinrichtung die entsprechende, programmtechnisch realisierte Applikation vorzusehen.

## Patentansprüche

1. Verfahren zum Einrichten von Leistungsmerkmalen (AUL,RR) für an ein Kommunikationssystem (KS) angeschlossene Kommunikationsendgeräte (KE1..n), wobei das Kommunikationssystem (KS) über eine Applikationsschnittstelle (ACL) mit einer Applikationseinrichtung (PC) und über Verbindungsleitungen (VL1..x) mit einem Kommunikationsnetz (KN) verbunden ist,
- bei dem vom Kommunikationsnetz (KN) ankommende, an ein Kommunikationsendgerät (KE1..n) des Kommunikationssystems (KS) gerichtete, erfolglose Anrufe (ar') sowie an zumindest ein vorgegebenes, ein Leistungsmerkmal repräsentierendes, virtuelles Leistungsmerkmal-Kommunikationsendgerät (KE-AUL, KE-RR) gerichtete, ankommende Anrufe (ar'') erfaßt werden, wobei eine jeweils miterfaßte Rufnummer (rnr, rng, aul-rn, rr-rn) des rufenden und des gerufenen Kommunikationsendgerätes (KE-KN, KE1..n, KE-AUL, KE-RR) über die Applikationsschnittstelle (ACL) an die Applikationseinrichtung (ACL) übermittelt wird,
- bei dem jeweils für ein Kommunikationsendgerät (KE1..n) des Kommunikationssystems (KS) in der Applikationseinrichtung (PC) in Abhängigkeit von den erfaßten Rufnummern (rnr, rng, aul-rn, rr-rn) ein Leistungsmerkmal (AUL, RR) einschließlich zumindest eines Teils der Rufnummern (rnr, rng, aul-rn, rr-rn) eingetragen wird,
-- wobei das einzutragende Leistungsmerkmal (AUL, RR) durch die Rufnummer (aul-rn, rr-rn) des virtuellen Leistungsmerkmal-Kommunikationsendgerät (KE-AUL, KE-RR) bestimmt ist.

2. Verfahren nach Anspruch 1, **dadurch gekennzeichnet, daß** das Kommunikationssystem (KS) durch ein privates Kommunikationssystem (KS) und das Kommunikationsnetz (KN) durch ein öffentliches Kommunikationsnetz (KN) repräsentiert ist.

3. Verfahren nach Anspruch 1 oder 2, **dadurch gekennzeichnet,**
- **daß** bei einem einzurichtenden Leistungsmerkmal Rückruf (RR) dem Leistungsmerkmal-Kommunikationsendgerät (KE-RR) eine das Leistungsmerkmal Rückruf anzeigende Rufnummer (rr-rn) zugeordnet ist,
- **daß** in der Applikationseinrichtung (PC) ein Rückruf (RR) eingetragen wird,
-- sofern innerhalb einer vorgegebenen Zeitspanne
--- zumindest ein ankommender, erfolgloser Anruf (ar') für das jeweilige Kommunikationsendgerät (KE) und ein an ein virtuelles Leistungsmerkmal-Kommunikationsendgerät (KE-RR) gerichteter, ankommender Anruf (ar'') erfaßt werden, bei denen die Rufnummern (rnr) des rufenden Kommunikations-endgerätes (KE-KN) übereinstimmen,
- **daß** in der Applikationseinrichtung (PC) nach einem Eintragen eines Rückrufs (RR) für ein jeweiliges, an das private Kommunikationssystem (KS) angeschlossene Kommunikationsendgerät (KE1..n) nach einer vom Kommunikationssystem (KS) gemeldeten Aktivität des jeweiligen Kommunikationsendgerätes (KE1..n) für dieses ein Rückruf (RR) eingeleitet wird.

4. Verfahren nach Anspruch 3, **dadurch gekennzeichnet, daß** der Rückruf (RR) durch Übermitteln von die Rufnummern (rnr, rng) des rufenden und gerufenen Kommunikationsendgerätes (KE-KN, KE1..n) enthaltende, betriebstechnischen Anweisungen (amo) über die Applikationsschnittstelle (ACL) an das Kommunikationssystem (KS) eingeleitet wird, und daß im Kommunikationssystem (KS) gemäß den betriebstechnischen Anweisungen (amo) ein Verbindungsaufbau vom jeweiligen Kommunikationsendgerät (KE1..n) des privaten Kommunikationssystems (KS) zu dem jeweiligen Kommunikationsendgerät (KE-KN) im öffentlichen Kommunikationsnetz (KN) aufgebaut wird.

5. Verfahren nach Anspruch 1 oder 2, **dadurch gekennzeichnet,**
- **daß** bei einem einzurichtenden Leistungsmerkmal Anrufumleitung (AUL) dem virtuellen Leistungsmerkmal-Kommunikationsendgerät (KE-AUL) für die jeweiligen Kommunikationsendgeräte (KE1..n) eine eine Anrufumleitung anzeigende Rufnummer (aul-rn) zugeordnet ist,
- **daß** in der Applikationseinrichtung (PC) eine Anrufumleitung (AUL) für das jeweilige Kommunikationsendgerät (KE1..n) eintragen wird, sofern ein an das jeweilige Leistungsmerkmal-Kommunikationsendgerät (KE-AUL) gerichteter, ankommender Anruf (ar") erfaßt wird,
- **daß** für die jeweiligen Kommunikationsendgeräte (KE) in der Applikationseinrichtung (PC) eine Anrufumleitungs-Rufnummer (ruml) eingetragen ist,
- **daß** mit Hilfe der Applikationseinrichtung (PC) nach einem Eintragen einer Anrufumleitung (AUL) für ein an das private Kommunikationssystem (KS) angeschlossene Kommunikationsendgerät (KE1..n) ein an dieses gerichteter ankommender Anruf (ar) zu einem durch die Anrufumleitungs-Rufnummer (ruml) bestimmten Kommunikationsendgerät (KE-KN, KE1..n) umgeleitet wird.

6. Verfahren nach Anspruch 1 oder 2, **dadurch gekennzeichnet,**
- **daß** bei einem einzurichtenden Leistungsmerkmal Anrufumleitung (AUL) dem virtuellen Leistungsmerkmal-Kommunikationsendgerät (KE-AUL) für die jeweiligen Kommunikationsendgeräte (KE1..n) eine eine Anrufumleitung anzeigende Rufnummer (aul-rn) zugeordnet ist,
- **daß** in der Applikationseinrichtung (PC) eine Anrufumleitung (AUL) für das jeweilige Kommunikationsendgerät (KE1..n) eintragen wird, sofern ein an das jeweilige virtuelle Leistungsmerkmal-Kommunikationsendgerät (KE-AUL) gerichteter, ankommender Anruf (ar") erfaßt wird,
- **daß** in einen an das Leistungsmerkmal-Kommunikationsendgerät (KE-AUL) gerichteten, ankommenden Anruf (ar'') zumindest eine Anrufumleitungs-Rufnummer (ruml) eingefügt ist, die zusätzlich erfaßt und an die Applikationseinrichtung (PC) übermittelt sowie in dieser gespeichert wird, und
- **daß** in der Applikationseinrichtung (PC) nach einem Eintragen einer Anrufumleitung (AUL) für ein an das private Kommunikationssystem (KS) angeschlossene Kommunikationsendgerät (KE1..n) ein an dieses gerichteter ankommender Anruf (ar) zu einem durch die Anrufumleitungs-Rufnummer (ruml) bestimmten Kommunikationsendgerät (KE-KN, KE1..n) umgeleitet wird.

7. Verfahren nach Anspruch 5 oder 6, **dadurch gekennzeichnet, daß** in der Applikationseinrichtung (PC) nach einem Melden eines ankommenden Anrufes (ar), der an ein Kommunikationsendgerät (KE1..n) des privaten Kommunikationssystems (KS) gerichtet und für den eine Anrufumleitung (AUL) eingerichtet ist, die Anrufumleitung (AUL) durch Übermitteln von betriebstechnischen Anweisungen (amo) über die Applikationsschnittstelle (ACL) an das Kommunikationssystem (KS) eingeleitet wird, und daß im Kommunikationssystem (KS) gemäß den betriebstechnischen Anweisungen (amo) der ankommende Anruf (ar) an ein durch die Anrufumleitungs-Rufnummer (ruml) bestimmtes Kommunikationsendgerät (KE-KN, KE1..n) umgeleitet wird.

8. Verfahren nach einem der vorhergehenden Ansprüche, **dadurch gekennzeichnet, daß** im Kommunikationssystem (KS) die Verbindungsleitungen (VL1..z) einer Verkehrsbeziehungsgruppe (SA) zugeordnet sind, daß erfolglose Anrufe (ar') und an den Leistungsmerkmal-Kommunikationsendgerät (KE-AUL, KE-RR) ankommende Anrufe (ar'') der Verkehrsbeziehungsgruppe (SA) mit Hilfe einer im Kommunikationssystem (KS) implementierten Vermittlungsroutine DGV erfaßt werden.

9. Verfahren nach einem der vorhergehenden Ansprüche, **dadurch gekennzeichnet, daß** das öffentliche Kommunikationsnetz (KN) durch ein diesteintegrierendes digitales Kommunikationsnetz (ISDN) repräsentiert ist.

10. Applikationseinrichtung zum Einrichten von Leistungsmerkmalen (AUL,RR) in einem Kommunikationssystem (KS),
- mit einem Mikroprozessorsystem (MPS) zur Überwachung der Applikationseinrichtung (PC) und zur Ausführung einer programmtechnisch realisierten
-- Erfassungroutine (ER)
--- zur Erfassung der über die Applikationsschnittstelle (ACL) übermittelten Rufnummern (rnr, rng, aul-rn, rr-rn, ruml) von erfolglosen Anrufen (ar') und von an zumindest ein virtuelles Leistungsmerkmal-Kommunikationsendgerät (KE-AUL, KE-RR) gerichteten ankommenden Anrufen (ar'') und
--- zur Ermittlung von einzutragenden Leistungsmerkmalen (AUL, RR) anhand der übermittelten Rufnummern (rnr, rng, aul-rn, rr-rn,ruml) und einer vorgegebenen Zeitspanne,
-- und zusätzlich zur Ausführung einer Anrufumleitungsroutine (AULR) zum Einleiten einer Umleitung eines über die Applikationsschnittstelle (ACL) gemeldeten ankommenden Anrufs (ar) für ein Kommunikationsendgerät (KE1..n) des privaten Kommunikationssystems (KS), für das eine Anrufumleitung eingerichtet ist, und/oder einer
-- Rückrufroutine (RRR) zum Einleiten eines Rückrufs (RR) im Kommunikationssystem (KS) nach einer über die Applikationsschnittstelle (ACL) gemeldeten Aktivierung eines Kommunikationsendgerätes (KE1..n), für das ein Rückruf (RR) eingerichtet ist.

## Claims

1. Method for introducing features (AUL, RR) for communication terminals (KE1..n) connected to a communication system (KS), said system being connected via an application interface (ACL) to an application device (PC) and via trunk circuits (VL1..x) to a communication network (KN),
- wherein unsuccessful calls (ar') arriving from the communication network (KN) which are directed at a communication terminal (KE1..n) of the communication system (KS) and incoming calls (ar'') directed at at least one specified virtual feature communication terminal (KE-AUL, KE-RR) representing a feature are registered, with an in each case co-registered directory number (rnr, rng, aul-rn, rr-rn) of the calling and of the called communication terminal (KE-KN, KEI..n, KE-AUL, KE-RR) being transmitted to the application device (ACL) via the application interface (ACL),
- wherein a feature (AUL, RR), including at least a part of the directory numbers (rnr, rng, aul-rn, rr-rn), is entered in the application device (PC), in each case for one communication terminal (KE1..n) of the communication system (KS), as a function of the registered directory numbers (rnr, rng, aul-rn, rr-rn),
-- with the feature (AUL, RR) requiring to be entered being determined by the directory number (aul-rn, rr-rn) of the virtual feature communication terminal (KE-AUL, KE-RR).

2. Method according to Claim 1 **characterised in that** the communication system (KS) is represented by means of a private communication system (KS) and **in that** the communication network (KN) is represented by means of a public communication network (KN).

3. Method according to Claim 1 or 2 **characterised in that**
- when a callback feature (RR) is required to be introduced, the feature communication terminal (KE-RR) is assigned the directory number (rr-rn) indicating the callback feature,
- **in that** a callback (RR) is entered in the application device (PC),
-- if, within a specified period of time,
--- at least one incoming, unsuccessful call (ar') for the respective communication terminal (KE) and one incoming call (ar'') directed at a virtual feature communication terminal (KE-RR) are registered where the directory numbers (rnr) of the calling communication terminal (KE-KN) coincide,
- **in that**, following entry of a callback (RR) for a respective communication terminal (KE1..n) connected to the private communication system (KS), a callback (RR) is initiated in the application device (PC) for said terminal after an activity of the respective communication terminal (KE1..n) reported by the communication system (KS).

4. Method according to Claim 3 **characterised in that** the callback (RR) is initiated by means of transmitting administration & maintenance orders (amo) containing the directory numbers (rnr, rng) of the calling and called communication terminal (KE-KN, KE1..n) to the communication system (KS) via the application interface (ACL), and **in that** a connection is set up in the communication system (KS) from the respective communication terminal (KE1..n) of the private communication system (KS) to the respective communication terminal (KE-KN) in the public communication network (KN) in accordance with the administration & maintenance orders (amo).

5. Method according to Claim 1 or 2 **characterised in that**
- when a call forwarding feature (AUL) is required to be introduced, the virtual feature communication terminal (KE-AUL) is assigned a directory number (aul-rn) indicating call forwarding for the respective communication terminals (KE1..n),
- **in that** call forwarding (AUL) will be entered in the application device (PC) for the respective communication terminal (KE1..n) if an incoming call (ar") directed at the respective feature communication terminal (KE-AUL) is registered,
- **in that** a call forwarding directory number (ruml) is entered in the application device (PC) for the respective communication terminals (KE),
- **in that**, following entry of call forwarding (AUL) for a communication terminal (KE1..n) connected to the private communication system (KS), an incoming call (ar) directed at said terminal will be redirected with the aid of the application device (PC) to a communication terminal (KE-KN, KE1..n) determined by the call forwarding directory number (ruml).

6. Method according to Claim 1 or 2 **characterised in that**
- when a call forwarding feature (AUL) is required to be introduced, the virtual feature communication terminal (KE-AUL) is assigned a directory number (aul-rn) indicating call forwarding for the respective communication terminals (KE1..n),
- **in that** call forwarding (AUL) will be entered in the application device (PC) for the respective communication terminal (KE1..n) if an incoming call (ar'') directed at the respective virtual feature communication terminal (KE-AUL) is registered,
- **in that** an incoming call (ar'') directed at the feature communication terminal (KE-AUL) includes at least one call forwarding directory number (ruml) which is additionally registered, transmitted to the application device (PC), and stored therein, and
- **in that**, following entry of call forwarding (AUL) for a communication terminal (KE1..n) connected to the private communication system (KS), an incoming call (ar) will be redirected in the application device (PC) to a communication terminal (KE-KN, KE1..n) determined by the call forwarding directory number (ruml).

7. Method according to Claim 5 or 6 **characterised in that**, after reporting of an incoming call (ar) that was directed to a communication terminal (KE1..n) of the private communication system (KS) and for which call forwarding (AUL) has been introduced, call forwarding (AUL) will be initiated in the application device (PC) through the transmission of administration & maintenance orders (amo) via the application interface (ACL) to the communication system (KS), and **in that** in accordance with the administration & maintenance orders (amo), the incoming call (ar) will be redirected in the communication system (KS) to a communication terminal (KE-KN, KE1..n) determined by the call forwarding directory number (ruml).

8. Method according to one of the preceding Claims **characterised in that** the trunk circuits (VL1..z) are assigned in the communication system (KS) to an internal traffic restriction group (SA), and **in that** unsuccessful calls (ar') and incoming calls (ar") of the internal traffic restriction group (SA) arriving at the feature communication terminal (KE-AUL, KE-RR) are registered with the aid of a call processing routine DGV implemented in the communication system (KS).

9. Method according to one of the preceding Claims **characterised in that** the public communication network (KN) is represented by means of an integrated services digital network (ISDN).

10. Application device for introducing features (AUL,RR) in a communication system (KS),
- with a microprocessor system (MPS) for monitoring the application device (PC) and for executing a
-- registering routine (ER) implemented by programming means
--- for registering the directory numbers (rnr, rng, aul-rn, rr-rn, ruml) transmitted via the application interface (ACL) of unsuccessful calls (ar') and of incoming calls (ar'') directed at at least one virtual feature communication terminal (KE-AUL, KE-RR), and
--- for determining, on the basis of the transmitted directory numbers (rnr, rng, aul-rn, rr-rn,ruml) and of a specified period of time, features (AUL, RR) requiring to be entered,
-- and additionally for executing a call forwarding routine (AULR) for initiating redirection of an incoming call (ar) reported via the application interface (ACL) for a communication terminal (KE1..n) of the private communication system (KS) for which call forwarding has been introduced, and/or a
-- callback routine (RRR) for initiating a callback (RR) in the communication system (KS) following activation, reported via the application interface (ACL), of a communication terminal (KE1..n) for which a callback (RR) has been introduced.

## Revendications

1. Procédé pour introduire des services (AUL, RR) pour des terminaux de communication (KE1..n) raccordés à un système de communication (KS), le système de communication (KS) étant relié via une interface d'application (ACL) à un dispositif d'application (PC) et via des lignes de liaison (VL1..x) à un réseau de communication (KN),
- dans lequel on détecte des appels infructueux (ar') provenant du réseau de communication (KN) et adressés à un terminal de communication (KE1..n) du système de communication (KS) ainsi que des appels entrants (ar") adressés à au moins un terminal de communication virtuel intégrant un service (KE-AUL, KE-RR) défini à l'avance et représentant un service,
un numéro d'appel (rnr, rng, aul-rn, rr-rn), détecté à chaque fois en même temps, des terminaux de communication appelant et appelé (KE-KN, KE1..n, KE-AUL, KE-RR) étant transmis via l'interface d'application (ACL) au dispositif d'application (ACL),
- dans lequel on enregistre, à chaque fois pour un terminal de communication (KE1..n) du système de communication (KS), dans le dispositif d'application (PC) en fonction des numéros d'appel détectés (rnr, rng, aul-rn, rr-rn) un service (AUL, RR) y compris au moins une partie des numéros d'appels (rnr, rng, aul-rn, rr-rn),
-- le service (AUL, RR) à enregistrer étant défini par le numéro d'appel (aul-rn, rr-rn) du terminal de communication virtuel intégrant un service (KE-AUL, KE-RR).

2. Procédé selon la revendication 1, **caractérisé en ce que** le système de communication (KS) est représenté par un système de communication privé (KS) et le réseau de communication (KN) par un réseau de communication public (KN).

3. Procédé selon la revendication 1 ou 2, **caractérisé en ce que**
- lorsque le service à introduire est un rappel (RR), un numéro d'appel (rr-rn) indiquant le service rappel est attribué au terminal de communication intégrant un service (KE-RR),
- **en ce qu'**on enregistre un rappel (RR) dans le dispositif d'application (PC),
-- si dans un intervalle de temps prédéfini
--- on détecte au moins un appel entrant infructueux (ar') pour le terminal de communication (KE) correspondant et un appel entrant (ar") adressé à un terminal de communication virtuel intégrant un service (KE-RR), où les numéros d'appel (rnr) du terminal de communication appelant (KE-KN) correspondent,
- **en ce qu'**on déclenche dans le dispositif d'application (PC), après un enregistrement d'un rappel (RR) pour un terminal de communication correspondant (KE1..n) raccordé au système de communication privé (KS) après une activité signalée par ledit système de communication (KS) dudit terminal de communication (KE1..n), un rappel (RR) pour celui-ci.

4. Procédé selon la revendication 3, **caractérisé en ce qu'**on déclenche le rappel (RR) par transmission d'instructions d'exploitation (amo) contenant les numéros d'appel (rnr, rng) des terminaux de communication appelant et appelé (KE-KN, KE1..n) via l'interface d'application (ACL) au système de communication (KS) et **en ce qu'**on établit dans ledit système de communication (KS), selon lesdites instructions d'exploitation (amo), une connexion depuis le terminal de communication correspondant (KE1..n) du système de communication privé (KS) vers le terminal de communication correspondant (KE-KN) du réseau de communication public (KN).

5. Procédé selon la revendication 1 ou 2, **caractérisé en ce que**
- lorsque le service à introduire est un renvoi d'appel (AUL), un numéro d'appel (aul-rn) indiquant un renvoi d'appel pour les terminaux de communication correspondants (KE1..n) est attribué au terminal de communication virtuel intégrant un service (KE-AUL),
- **en ce qu'**on enregistre dans le dispositif d'application (PC) un renvoi d'appel (AUL) pour le terminal de communication correspondant (KE1..n) si on détecte un appel entrant (ar") adressé au terminal de communication correspondant intégrant un service (KE-AUL),
- **en ce qu'**un numéro d'appel de renvoi d'appel (ruml) pour les terminaux de communication correspondants (KE) est enregistré dans le dispositif d'application (PC),
- **en ce qu'**à l'aide du dispositif d'application (PC), après un enregistrement d'un renvoi d'appel (AUL) pour un terminal de communication (KE1..n) raccordé au système de communication privé (KS), un appel entrant (ar) adressé à celui-ci est renvoyé vers un terminal de communication (KE-KN, KE1..n) défini par le numéro d'appel de renvoi d'appel (ruml).

6. Procédé selon la revendication 1 ou 2, **caractérisé**
- **en ce que** lorsque le service à introduire est un renvoi d'appel (AUL), un numéro d'appel (aul-rn) indiquant un renvoi d'appel pour les terminaux de communication correspondants (KE1..n) est attribué au terminal de communication virtuel intégrant un service (KE-AUL),
- **en ce qu'**on enregistre dans le dispositif d'application (PC) un renvoi d'appel (AUL) pour le terminal de communication correspondant (KE1..n) si on détecte un appel entrant (ar") adressé au terminal de communication virtuel intégrant un service (KE-AUL),
- **en ce que** dans un appel entrant (ar") adressé au terminal de communication intégrant un service (KE-AUL) est inséré au moins un numéro d'appel de renvoi d'appel (ruml) qui est également détecté et transmis au dispositif d'application (PC) et enregistré dans celui-ci, et
- **en ce que** dans ledit dispositif d'application (PC), après un enregistrement d'un renvoi d'appel (AUL) pour un terminal de communication (KE1..n) raccordé au système de communication privé (KS), un appel entrant (ar) adressé à celui-ci est renvoyé vers un terminal de communication (KE-KN, KE1..n) défini par le numéro d'appel de renvoi d'appel (ruml).

7. Procédé selon la revendication 5 ou 6, **caractérisé en ce que** dans le dispositif d'application (PC), après un signalement d'un appel entrant (ar) qui est destiné à un terminal de communication (KE1..n) du système de communication privé (KS) et pour qui un renvoi d'appel (AUL) est configuré, on déclenche le renvoi d'appel (AUL) par transmission d'instructions d'exploitation (amo) via l'interface d'application (ACL) au système de communication (KS), et **en ce que** dans ledit système de communication (KS), selon lesdites instructions d'exploitation (amo), on renvoie l'appel entrant (ar) à un terminal de communication (KE-KN, KE1..n) défini par le numéro d'appel de renvoi d'appel (ruml).

8. Procédé selon l'une des revendications précédentes, **caractérisé en ce que** dans le système de communication (KS) les lignes de liaison (VL1..z) sont attribuées à un groupe de relation de trafic (SA), **en ce que** les appels infructueux (ar') et les appels (ar") arrivant aux terminaux de communication intégrant un service (KE-AUL, KE-RR) du groupe de relation de trafic (SA) sont détectés à l'aide d'une routine de commutation DGV implémentée dans le système de communication (KS).

9. Procédé selon l'une des revendications précédentes, **caractérisé en ce que** le réseau de communication public (KN) est représenté par un réseau de communication numérique à intégration de services (RNIS).

10. Dispositif d'application pour introduire des services (AUL, RR) dans un système de communication (KS),
- comprenant un système à microprocesseur (MPS) pour contrôler le dispositif d'application (PC) et pour exécuter
-- une routine de détection (ER) réalisée par programme,
--- destinée à détecter les numéros d'appel (rnr, rng, aul-rn, rr-rn, ruml), transmis par l'interface d'application (ACL), d'appels infructueux (ar') et d'appels entrants (ar") adressés à au moins un terminal de communication virtuel intégrant un service (KE-AUL, KE-RR) et
--- à déterminer des services à enregistrer (AUL, RR) à l'aide des numéros d'appel transmis (rnr, rng, aul-rn, rr-rn, ruml) et d'un intervalle de temps prédéfini,
et pour exécuter en outre
-- une routine de renvoi d'appel (AULR) pour déclencher un renvoi d'un appel entrant (ar) signalé via l'interface d'application (ACL) et destiné à un terminal de communication (KE1..n) du système de communication privé (KS), pour lequel un renvoi d'appel est configuré, et/ou
-- une routine de rappel (RRR) pour déclencher un rappel (RR) dans le système de communication (KS) après une activation, signalée via l'interface d'application (ACL), d'un terminal de communication (KE1..n) pour lequel un rappel (RR) est installé.
